# EUROPÄISCHE PATENTANMELDUNG

(11) **EP 4 098 590 A1**
(43) Veröffentlichungstag der Anmeldung: **07.12.2022**
(21) Anmeldenummer: 22170256.6
(22) Anmeldetag: 27.04.2022
(51) Int. Cl.: B65G 1/137, B65G 61/00, B66F 9/06, B25J 5/00, B25J 9/16, G05B 19/418

(54) **VERFAHREN UND SYSTEM ZUM KOMMISSIONIEREN VON STÜCKGÜTERN**

(30) Priorität: 31.05.2021 DE 102021114004
(71) Anmelder: Linde Material Handling GmbH, 63743 Aschaffenburg (DE)
(72) Erfinder: BROCKEL, Sascha, 63906 Erlenbach a. Main (DE); KRUMBHOLZ, Peter, 63869 Jakobsthal (DE); TREBER, Florian, 63739 Aschaffenburg (DE); GROH, Jonas, 63743 Aschaffenburg (DE)
(74) Vertreter: Patentship Patentanwaltgesellschaft

(57) **Zusammenfassung**

Die Erfindung betrifft ein Verfahren zum Kommissionieren von Stückgütern (P), die auf mindestens einem Quell-Ladungsträger bevorratet und vereinzelt auf mindestens einem Ziel-Ladungsträger (Z) abgelegt werden, wobei die Stückgüter (P) mittels einer auf einem autonomen Flurförderzeug (1) angeordneten, mit einem Aufnahmewerkzeug (G) versehenen, Handhabungseinrichtung (R) von dem Quell-Ladungsträger (Q) aufgenommen und in einem Ablageprozess auf dem Ziel-Ladungsträger (Z) abgelegt werden. Es wird vorgeschlagen, dass der Ablageprozess mehrere Schritte umfasst, wobei in einem ersten Schritt eine Vorabberechnung eines optimierten Packmusters anhand eines Kommissionierauftrags durchgeführt wird, gemäß dem die Stückgüter (P) auf dem Ziel-Ladungsträger (Z) gestapelt werden, in einem zweiten Schritt eine sensorgestützte Lokalisierung des Ziel-Ladungsträgers durchgeführt wird und in einem dritten Schritt eine sensorgestützte Freiraumerkennung durchgeführt wird, bei der eine aktuelle Zielposition des abzulegenden Stückguts (P) auf dem Ziel-Ladungsträger (Z) und eine kollisionsfreie Ablagebewegung der Handhabungseinrichtung (R) bestimmt werden. Ferner betrifft die Erfindung ein System zur Durchführung des Verfahrens.

## Beschreibung

Die Erfindung betrifft ein Verfahren zum Kommissionieren von Stückgütern, die auf mindestens einem Quell-Ladungsträger bevorratet und vereinzelt auf mindestens einem Ziel-Ladungsträger abgelegt werden, wobei die Stückgüter mittels einer auf einem autonomen Flurförderzeug angeordneten, mit einem Aufnahmewerkzeug versehenen, Handhabungseinrichtung von dem Quell-Ladungsträger aufgenommen und in einem Ablageprozess auf dem Ziel-Ladungsträger abgelegt werden.

Außerdem betrifft die Erfindung ein System zur Durchführung des Verfahrens.

Unter Kommissionierung versteht man alle Methoden zur Zusammenstellung von bestimmten Objekten, insbesondere von Stückgütern, beispielsweise Packstücken, in Warenlagern, aus einem bereitgestellten Gesamtsortiment. Dabei soll die Zusammenstellung aufgrund von Aufträgen, z.B. Kundenaufträgen oder Produktionsaufträgen erfolgen. In jüngster Zeit werden hierfür vermehrt automatische Systeme eingesetzt. Dabei werden z.B. Packstücke als zu kommissionierende Objekte von autonom oder automatisch betriebenen Kommissionierfahrzeugen von einer Quellposition, insbesondere einem Quell-Ladungsträger, z.B. einer Quellpalette, aufgenommen und auf einem auf dem Kommissionierfahrzeug transportierten Ziel-Ladungsträger, z.B. einer Zielpalette, abgesetzt. Insbesondere werden hierzu mobile Kommissionierroboter verwendet, die die Packstücke selbstständig mittels Roboterarmen von einem Quell-Ladungsträger aufnehmen und anschließend auf einem Ziel-Ladungsträger ablegen können. Diese Kommissionierroboter erhalten die Auftragsdaten wie Auftragsnummer, Koordinaten des Lagerortes, Stückzahl und Gewicht der Güter automatisch von einem Zentralrechner. Die Kommissionierroboter können z.B. bestimmte Regalfächer in Regallagern gezielt anfahren und das gewünschte Objekt mithilfe eines ein Aufnahmewerkzeug aufweisenden Greifsystems aus dem Regalfach entnehmen. Das Aufnahmewerkzeug kann als Greifer, beispielsweise als Adhäsionsgreifer oder Vakuumgreifer, ausgebildet sein. Das Greifen der Objekte wird auch als Picken bezeichnet. Das Transferieren der Packstücke von der Quellpalette zur Zielpalette wird auch als Pick & Place - Prozess bezeichnet.

Beim Kommissionieren werden hierbei Stückgüter aus sortenreinen Quell-Ladungsträgern entnommen und auf dem Ziel-Ladungsträger eine Mischpalette mit unterschiedlichen Stückgütern aufgebaut.

Aus der DE 10 2017 130 577 A1 ist beispielsweise ein mobiler Kommissionierroboter zur automatischen Kommissionierung von Objekten mit einem vertikal ausgerichteten Hubmast und einem daran höhenbeweglich angebrachten, horizontal ausgerichteten Roboterarm mit mehreren aneinander gereihten Armelementen bekannt, welche über Armgelenke mit vertikalen Armgelenksdrehachsen verfügen, wobei das letzte am äußeren Reihenende angeordnete Armelement über ein Handgelenk mit vertikaler Handgelenksdrehachse mit einem Aufnahmewerkzeug zur Aufnahme der Objekte verbunden ist.

Das Ablegen der Stückgüter auf dem Ziel-Ladungsträger ist zentraler Bestandteil eines autonomen Kommissionierprozesses. Stückgüter, die zuvor aus einem Regallager gegriffen wurden, sind dabei entsprechend eines Auftrags gezielt auf dem dafür vorgesehenen Ladungsträger zu platzieren.

Ziel des Ablageprozesses ist es, die Stückgüter mit einer sehr hohen Genauigkeit an den gewünschten Zielkoordinaten abzulegen, um ein dichtes und stabiles Packmuster des Ziel-Ladungsträgers zu ermöglichen. Als Ladungsträger kommen weitestgehend Paletten in verschiedenen Größen zum Einsatz. Im Falle von Paletten kann der Ziel-Ladungsträger auch als Zielpalette bezeichnet werden. Auch Rollwagen, Gitterboxen oder Kisten sind möglich.

Im mobilen Anwendungsfall gelten für den Ablageprozess besonders hohe Anforderungen, da aufgrund der Bewegung des Flurförderzeugs Veränderungen des aktuellen Packzustands des Ziel-Ladungsträgers durch Verrutschen oder Stürzen von bereits abgelegten Stückgütern jederzeit möglich sind. Die Situation auf dem Ziel-Ladungsträger muss daher kontinuierlich überprüft werden. Weiterhin ist es zwingend erforderlich, die bereits auf dem Ziel-Ladungsträger platzierte Ladung zu stabilisieren. Die direkt auf dem Flurförderzeug aufgebaute Mischpalette muss alle Anforderungen hinsichtlich Stabilität und Volumennutzung (Kompaktheit) erfüllen, um anschließend gesichert und verladen werden zu können.

Der vorliegenden Erfindung liegt die Aufgabe zugrunde, ein Verfahren der genannten Art sowie ein System zur Durchführung des Verfahrens so auszugestalten, dass eine automatisierte Kommissionierung mit hoher Genauigkeit ermöglicht wird.

Diese Aufgabe wird verfahrensseitig erfindungsgemäß dadurch gelöst, dass der Ablageprozess mehrere Schritte umfasst, wobei in einem ersten Schritt eine Vorabberechnung eines optimierten Packmusters anhand eines Kommissionierauftrags durchgeführt wird, gemäß dem die Stückgüter auf dem Ziel-Ladungsträger gestapelt werden, in einem zweiten Schritt eine sensorgestützte Lokalisierung des Ziel-Ladungsträgers durchgeführt wird und in einem dritten Schritt eine sensorgestützte Freiraumerkennung durchgeführt wird, bei der eine aktuelle Zielposition des abzulegenden Stückguts auf dem Ziel-Ladungsträger und eine kollisionsfreie Ablagebewegung der Handhabungseinrichtung bestimmt werden.

Die Handhabungseinrichtung wird im Folgenden auch kurz als Manipulator bezeichnet. Außerdem wird der Ziel-Ladungsträger hinsichtlich des häufigsten Anwendungsfalls, bei dem Paletten als Ladungsträger verwendet werden, auch kurz als Zielpalette bezeichnet.

Erfindungsgemäß setzt sich also der Ablageprozess aus verschiedenen Schritten zusammen, um insbesondere den Anwendungsfall des mobilen Mischpalettenaufbaus bestmöglich zu realisieren.

Grundlage für den Aufbau der Mischpalette ist die initiale Berechnung des gewünschten Packmusters anhand der im Kommissionierauftrag enthaltenen Produkte.

Hierzu wird im ersten Schritt das optimierte Packmuster des Ziel-Ladungsträgers vorzugsweise nach Bewertungskriterien berechnet, die Stabilität, Höhe und Volumennutzung der gestapelten Stückgüter umfassen.

Bei der Berechnung des optimierten Packmusters können dabei eine optimale Zielposition auf dem Ziel-Ladungsträger und eine optimale Packreihenfolge definiert werden. Durch das berechnete Packmuster werden somit die ideale Zielposition hinsichtlich Lage und Orientierung auf der Zielpalette definiert und die Reihenfolge, also Sequenz, des gesamten Kommissionierprozesses beziehungsweise die damit verbundene Fahrzeugbewegung im Warenlager bestimmt.

Die Berechnung erfolgt zweckmäßigerweise zu Beginn des Kommissionierprozesses offline, d.h. in einem externen System, das notwendigerweise an die Infrastruktur des Lagerbetreibers angebunden ist und zusätzlich über eine entsprechende Schnittstelle zum Flurförderzeug verfügt. Somit steht das Packmuster dem Fahrzeugsystem jederzeit zur Verfügung und wird bei jedem Ablageprozess verwendet und auf dessen Einhaltung überprüft.

Alternativ zu einer offline-Berechnung des Packmusters kann das Packmuster online, d.h. zur Laufzeit der Kommissionierprozesses, berechnet werden. Dabei ist für jeden Ablagevorgang zunächst eine geeignete Zielposition zu bestimmen. Dies bietet mehr Flexibilität, um auf Abweichungen und unerwartete Situationen reagieren zu können. Es sind auch Zwischenlösungen denkbar, bei denen das Packmuster für eine begrenzte Anzahl nachfolgender Stückgüter berechnet wird oder das initial berechnete Packmuster aufgrund während des Kommissionierprozesses auftretender Bedingungen neu berechnet wird.

Im zweiten Schritt wird vorzugsweise die relative Position des Ziel-Ladungsträgers im Koordinatensystem des autonomen Flurförderzeugs und/oder der Handhabungseinrichtung bestimmt. Dadurch erfolgt eine Lokalisierung des Ziel-Ladungsträgers. Um eine gezielte Ablage der jeweiligen Stückgüter auf der Zielpalette zu ermöglichen, ist es erforderlich, die relative Position des Ziel-Ladungsträgers im Koordinatensystem des Flurförderzeugs beziehungsweise des Manipulators zu bestimmen. Die spezielle Lösung ist dabei abhängig vom eingesetzten Fahrzeugkonzept.

Befindet sich die Zielpalette auf einem zweiten Transportfahrzeug, wird ihre Position mittels geeigneter Sensorik bestimmt. Durch die direkte Lokalisierung der Palette lassen sich gegebenenfalls auftretende Positionsabweichungen der Fahrzeuge kompensieren.

Bei einer Aufnahme der Zielpalette auf dem gleichen Flurförderzeug hingegen, das auch den Kommissionierprozess durchführt, ist es zum einen möglich, die Ziel-Palette mittels einer speziellen Vorrichtung in ihrer Lage und Orientierung mechanisch zu arretieren. Auf diese Art und Weise lässt sich eine fixe Relation zwischen Zielpalette und Manipulator herstellen. Zum anderen kann die Position sicherheitshalber zusätzlich sensorisch überwacht beziehungsweise erfasst werden.

Wird ein Palettencontainer, in dem sich der Ziel-Ladungsträger befindet, zur Ladungsstabilisierung verwendet, kann dieser ebenfalls mit geeignet angebrachter Sensorik lokalisiert werden und so die Relation zur Zielpalette bestimmt werden.

Vor jedem Ablagevorgang eines Stückguts auf dem Ziel-Ladungsträger ist es erforderlich, die Zielposition des abzulegenden Stückguts gemäß dem Packmuster zu validieren. Die aktuelle Situation auf der Zielpalette muss dabei innerhalb gewisser Toleranzen dem vorberechneten Packmuster entsprechen. Hierzu ist der dritte Schritt des Ablageprozesses vorgesehen, in dem eine sensorgestützte Freiraumerkennung durchgeführt wird.

Dabei wird im dritten Schritt bevorzugt ein aktueller Packzustand auf dem Ziel-Ladungsträger mittels einer Sensorik erfasst. Die Sensorsignale werden in einer Datenverarbeitungseinheit ausgewertet und mit dem vorabberechneten Packmuster abgeglichen. Daraus werden dann die aktuelle Zielposition des abzulegenden Stückguts auf dem Ziel-Ladungsträger und die kollisionsfreie Ablagebewegung der Handhabungseinrichtung bestimmt.

Hierzu besitzt das Flurförderzeug ein Sensorsystem zur Erfassung und Überwachung des aktuellen Packzustands der Zielpalette. Als Sensorik wird bevorzugt eine optische Sensorik verwendet, die zweidimensionale Bildinformationen und/oder dreidimensionale Tiefeninformationen als Sensorsignale liefert.

Hierfür kommen vorzugsweise optische Sensoren zum Einsatz, wie zum Beispiel eine 2D- Monokamera, eine 3D-Stereokamera, eine 3D-Time-of-flight-Kamera oder ein 2D/3D LiDAR. Zielführend kann auch eine Kombination verschiedener Sensoreinheiten mittels einer Sensorfusion sein, um die Funktion bestmöglich zu erfüllen. Die Sensorsignale werden von der Datenverarbeitungseinheit aufgenommen, verarbeitet und interpretiert.

Die Datenverarbeitungseinheit kann als zentrale Datenverarbeitungseinheit ausgebildet sein oder mehrere dezentrale Datenverarbeitungseinrichtungen umfassen, die jeweils für verschiedene Aufgaben vorgesehen sind. Beispielsweise kann die Datenverarbeitungseinheit eine in die Sensorik integrierte Datenverarbeitungseinrichtung zur Verarbeitung der Sensorsignale umfassen. Die Datenverarbeitungseinheit kann aber auch eine Datenverarbeitungseinrichtung zur Verarbeitung der Sensorsignale umfassen, welche eine eigene dedizierte Hardware darstellt. Werden mehrere Datenverarbeitungseinrichtungen für verschiedene Aufgaben verwendet, so sind diese zu einer Datenverarbeitungseinheit zusammen geschaltet. Die Datenverarbeitungseinheit kann auch in eine zentrale Fahrzeugsteuerungseinheit integriert sein.

Mit Hilfe der zwei- bzw. dreidimensionalen Sensorinformationen können sowohl die Zielposition als auch der für die Ablagebewegung benötigte Raum des Manipulators auf mögliche Störkonturen, zum Beispiel durch verrutschte und/oder gestürzte Stückgüter, überprüft werden, um eine kollisionsfreie Ablage sicherzustellen.

Für diese Funktion ist eine uneingeschränkte Perspektive der Sensorik auf die Zielpalette, genauer gesagt auf die jeweilige Zielposition, wünschenswert. Hierbei ist es zielführend, möglichst einen Blick von oben, also aus einer Vogelperspektive, auf die Zielpalette zu gewährleisten, da die Zielpalette grundlegend von unten nach oben aufgebaut wird.

Daher wird vorteilhafterweise als Sensorik eine von oben auf den Ziel-Ladungsträger gerichtete Sensorik verwendet.

Zweckmäßigerweise wird als Sensorik eine vertikal verfahrbare Sensorik verwendet. Die variable Positionierung in vertikaler Richtung dient dazu, einen wiederholgenauen Abstand zur relevanten Lage der Zielpalette einnehmen zu können. Dadurch lässt sich die Sensorik entsprechend des Field-of-Views (FoV) und des Arbeitsabstands passend zur Zielpalette auslegen.

Besonders bevorzugt wird als Sensorik eine an der Handhabungseinrichtung, insbesondere an einer vertikal verfahrbaren Handhabungseinrichtung, angeordnete Sensorik verwendet.

Eine weitere Möglichkeit besteht darin, als Sensorik eine an einem starren Ausleger, insbesondere an einem vertikal verfahrbaren starren Ausleger, angeordnete Sensorik zu verwenden.

Für den Fall einer potentiellen Störkontur ist eine entsprechende Entscheidungsfindung notwendig, die das weitere Verhalten des Gesamtsystems definiert. Hierzu ist das Sensorsystem mit einer zentralen Steuerungseinheit in Verbindung.

Ist die vorberechnete Zielposition sowie der nötige Bewegungsraum des Manipulators hingegen frei von Störkonturen, erfolgt in einem anschließenden vierten Schritt eine präzise Ablage des Stückguts an dieser Position.

Dabei wird im vierten Schritt eine Feinpositionierung des abzulegenden Stückguts auf dem Ziel-Ladungsträger durchgeführt, bei der durch sensorgestützte Bestimmung der relativen Position des Aufnahmewerkzeugs im Koordinatensystem des Ziel-Ladungsträgers und Auswertung der Sensorsignale in einer Datenverarbeitungseinheit die Handhabungseinrichtung so gesteuert wird, dass das abzulegende Stückgut dicht neben benachbarten Stückgütern platziert wird.

Um die Ablagebewegung so genau wie möglich zu realisieren, können verschiedene Ansätze verwendet und gegebenenfalls kombiniert werden.

Ausgangsbasis bietet zunächst eine Erfassung der relativen Greifposition, um eine mögliche Positionstoleranz aus dem Greifvorgang zu bestimmen. Anhand dieser Information kann bei der Ablage eine Kompensation erfolgen, indem die Zielposition mit einem entsprechenden Offset behaftet wird.

Für eine Steigerung der Prozesszuverlässigkeit und Präzision bei der Ablage, kann die beispielsweise an der Handhabungseinrichtung angebrachte Sensorik dazu genutzt werden, das Packstück präzise und kollisionsfrei abzulegen. Dazu wird die Sensorinformation kontinuierlich ausgewertet und zur Prozesskontrolle und Kollisionsvermeidung genutzt. Im letzten Schritt des Ablageprozesses kann die Sensorinformation in die Bewegung des Manipulators mit einberechnet werden, um das Packstück möglichst dicht neben bereits vorhandenen Packstücken zu platzieren. Diese Methode kann auch mit dem Begriff "visual servoing" beschrieben werden.

Gemäß einer besonders bevorzugten Ausgestaltung der Erfindung ist vorgesehen, dass mittels einer am Aufnahmewerkzeug angeordneten Sensorik mindestens ein Sicherheitsfeld in einem Umgebungsbereich des Aufnahmewerkzeugs überwacht wird, wodurch eine kollisionsfreie Annäherung des abzulegenden Stückguts an bereits auf dem Ziel-Ladungsträger abgelegte Stückgüter ermöglicht wird.

Hierzu kann das, zum Beispiel als Greifer ausgebildete, Aufnahmewerkzeug, oder ein anderer Endeffektor des Manipulators mit einer geeigneten zusätzlichen Sensorik versehen werden, die die Umgebung des Greifers sowie des gegriffenen Stückguts erfasst und somit mögliche Kollisionen mit der Umgebung, zum Beispiel mit anderen Stückgütern, einem Palettencontainer etc., vermeidet. Durch das Sicherheitsfeld wird eine virtuelle Schutzhülle um den Endeffektor geschaffen. Hierzu dienen dreidimensionale Sensorinformationen von vorzugsweise optischen Sensoren, aber auch Radar- oder Ultraschallsensoren sind möglich.

Grundlegend wird das System während der Anfahrtsbewegung zur Kollisionsvermeidung genutzt. In einer weiteren Ausbaustufe wird darüber hinaus im letzten Schritt der Ablagebewegung eine sensorbasierte Annäherung an bereits auf der Zielpalette platzierte Stückgüter realisiert.

Eine weitere bevorzugte Ausgestaltung der Erfindung sieht vor, dass das Sicherheitsfeld kontinuierlich und situativ an den aktuellen Packzustand auf dem Ziel-Ladungsträger angepasst wird, um eine besonders präzise Ablage der Stückgüter zu ermöglichen.

Gemäß einer vorteilhaften Weiterbildung des Erfindungsgedankens ist vorgesehen, dass im vierten Schritt das abzulegende Stückgut mittels eines Ausgleichselements, das Relativbewegungen des Aufnahmewerkzeugs relativ zur Handhabungseinrichtung ermöglicht, spaltfrei neben benachbarten Stückgütern platziert wird.

Das Ausgleichelement erlaubt insbesondere eine relative Auslenkung des Aufnahmewerkzeugs, zum Beispiel des Greifers, bezüglich des letzten Armteils des Manipulators in mindestens vier Freiheitsgraden (3x Translation, 1x Rotation um die Hochachse). Diese Auslenkung kann sensorbasiert erfasst werden. Ausgehend davon kann die Bewegung entsprechend geregelt und das zu platzierende Stückgut ohne bleibenden Luftspalt neben benachbarten Stückgütern abgelegt werden.

In einer erweiterten Ausbaustufe können die Information der Sensorik genutzt werden, um im Fehlerfall intelligente Entscheidungen zu treffen. Beispielsweise kann bei einer Verletzung der erwarteten Packsituation auf der Zielpalette eine Neuberechnung des Packmusters anhand der noch verbleibenden, zu kommissionierenden Stückgüter durchgeführt werden, um die Ziel-Palette trotz Abweichung weiter aufzubauen.

Die Erfindung betrifft ferner ein System zur Durchführung des Verfahrens mit mindestens einem Quell-Ladungsträger und mindestens einem Ziel-Ladungsträger sowie einem autonomen Flurförderzeug, auf dem eine Handhabungseinrichtung mit einem Aufnahmewerkzeug zur Handhabung der Stückgüter sowie eine Datenverarbeitungseinheit, die über eine Schnittstelle zu einem fahrzeugexternen Warenmanagementsystem verfügt, und eine Sensorik, die mit der Datenverarbeitungseinheit in Wirkverbindung steht, angeordnet sind.

Bei dem System wird die gestellte Aufgabe dadurch gelöst, dass die Datenverarbeitungseinheit dazu eingerichtet ist, in einem ersten Schritt eine Vorabberechnung eines optimierten Packmusters anhand eines vom Warenmanagementsystem übermittelten Kommissionierauftrags durchzuführen, gemäß dem die Stückgüter auf dem Ziel-Ladungsträger gestapelt werden, in einem zweiten Schritt durch Auswertung der Sensorsignale der Sensorik eine Lokalisierung des Ziel-Ladungsträgers durchzuführen und in einem dritten Schritt durch Auswertung der Sensorsignale der Sensorik eine Freiraumerkennung durchzuführen, bei der eine aktuelle Zielposition des abzulegenden Stückguts auf dem Ziel-Ladungsträger und eine kollisionsfreie Ablagebewegung der Handhabungseinrichtung bestimmt werden.

Dabei umfasst die Sensorik bevorzugt mindestens einen optischen 3D-Sensor, insbesondere eine 3D-Kamera und/oder einen 3D-Laserscanner.

Für einen genauen Ablageprozess ist eine uneingeschränkte Perspektive der Sensorik von oben auf die Zielpalette, genauer gesagt auf die jeweilige Zielposition, wünschenswert.

Hierzu ist gemäß einer bevorzugten Ausgestaltung der Erfindung vorgesehen, dass die Sensorik mindestens einen höhenverstellbaren und auf den Ziel-Ladungsträger ausrichtbaren Sensor umfasst.

Dabei kann die Sensorik insbesondere mindestens einen an der Handhabungseinrichtung, insbesondere an einer höhenverstellbaren Handhabungseinrichtung, angeordneten Sensor umfassen. Der Sensor kann direkt am Endeffektor des Manipulators mit Blick nach unten angebracht sein. Dies bietet eine nahezu beliebige Positionierung über der Zielpalette und damit eine große Flexibilität bei der Sensordatenaufnahme.

Eine weitere vorteilhafte Ausgestaltung sieht vor, dass die Sensorik mindestens einen an einem starren Ausleger, insbesondere an einem höhenverstellbaren starren Ausleger, oberhalb des Ziel-Ladungsträgers angeordneten Sensor umfasst. Bei dieser Ausgestaltung kann der Sensor insbesondere an einem starren Ausleger befestigt sein, welcher höhenverfahrbar an einer vertikalen Hubvorrichtung des Flurförderzeugs angebracht ist. Damit ist ebenfalls eine Flexibilität in der vertikalen Positionierung sowie eine von der Sensorik unabhängige Manipulatorbewegung gegeben. Zusätzlich ergibt sich durch diese Anbringungsart der Vorteil, dass die Prozesse des Manipulators und der Sensorik deutlich weniger ineinander verschränkt sind. Insbesondere können Zeiten für den Scan der Mischpalette genutzt werden, während der Manipulator im Regal verfährt oder Stückgüter von der Quellpalette pickt. Da bei dieser Anbringungsart der Roboterarm sowie der Greifer mit Packstück aus der Vogelperspektive auch während der Bewegung überwacht werden können, ist eine sensorunterstützte Regelung des Ablageprozesses möglich.

Die Sensorik kann auch mindestens einen am Aufnahmewerkzeug angeordneten Sensor umfassen.

Gemäß einer vorteilhaften Weiterbildung des Erfindungsgedankens ist vorgesehen, dass die Handhabungseinrichtung über einen Roboterarm verfügt, wobei zwischen dem Roboterarm und dem Aufnahmewerkzeug ein Ausgleichselement angeordnet ist, welches Relativbewegungen zwischen dem Roboterarm und dem Aufnahmewerkzeug ermöglicht.

Die Erfindung bietet eine ganze Reihe von Vorteilen:
Es wird eine wesentliche Funktion für den mobilen Mischpalettenaufbau im autonomen Kommissionierprozess zur Verfügung gestellt.

Eine präzise Ablage von Stückgütern auf einer Zielpalette wird ermöglicht. Durch den präzisen Ablegeprozess können hinsichtlich Volumennutzung und Stabilität optimierte Zielpaletten gebaut werden.

Mit der Erfindung wird eine Kollisionsvermeidung mit der Umgebung während des Ablageprozesses von Stückgütern auf der Zielpalette erreicht.

Bei Anbringung der Sensorik zur Freiraumerkennung am Endeffektor ist ein zusätzliche Nutzung der Sensorik zur Stückguterkennung möglich.

Es sind keine weiteren Schritte zur Kommissionszusammenstellung notwendig. Die Zielpalette kann am Ende direkt gesichert und verladen werden.

Weitere Vorteile und Einzelheiten der Erfindung werden anhand der in den schematischen Figuren dargestellten Ausführungsbeispiele näher erläutert. Hierbei zeigen
- Figur 1: ein autonomes Flurförderzeug mit einem Ziel-Ladungsträger,
- Figur 2: eine Variante einer Anbringung der Sensorik am Aufnahmewerkzeug des Flurförderzeugs,
- Figur 3: eine Variante einer Anbringung der Sensorik an einem starren Ausleger des Flurförderzeugs und
- Figur 4: eine Sensorperspektive von oben auf den Ziel-Ladungsträger.

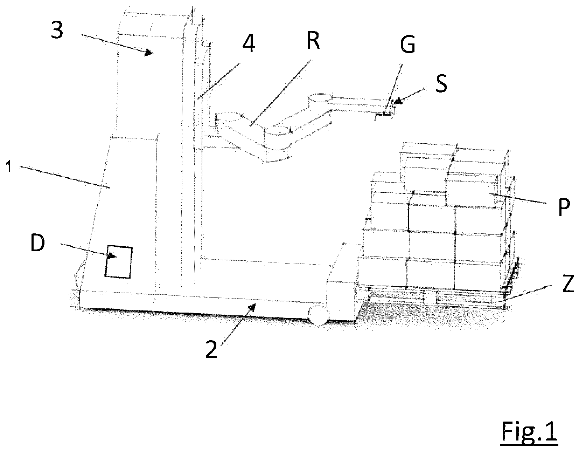

Die Figuren 1 bis 3 zeigen alle ein als autonomer Kommissionierroboter 1 ausgebildetes Flurförderzeug 1 mit einer als Roboterarm R ausgebildeten Handhabungseinrichtung R.

Die Figur 1 zeigt das Flurförderzeug 1 in einer perspektivischen Darstellung. Der als Zielpalette Z ausgebildete Ziel-Ladungsträger Z ist auf dem Flurförderzeug 1 angeordnet und kann mit diesem bewegt werden.

Der Kommissionierroboter 1 verfügt über eine mobile (fahrende) autonome Plattform 2, auf der ein vertikal ausgerichteter Hubmast 3 mit einem daran höhenbeweglich angebrachten Hubschlitten 4 befestigt ist. Am Hubschlitten 4 ist die Handhabungseinrichtung angebracht, im dargestellten Ausführungsbeispiel ein horizontal ausgerichteter Roboterarm R. Der Roboterarm R ist aus mehreren Armelementen zusammengesetzt. Die Armelemente sind jeweils über vertikal ausgerichtete Armgelenksdrehachsen gelenkig miteinander verbunden. Das letzte Armelement ist über eine, in der Figur nicht sichtbare, vertikale Handgelenksdrehachse mit dem als Greifer G ausgebildeten Aufnahmewerkzeug G gelenkig verbunden. Die Armelemente sind untereinander bzw. übereinander angeordnet und bilden eine flache Kinematik des Roboterarms R.

In der in Figur 1 gezeigten Darstellung ist die Sensorik S zur Zielpaletten-Lokalisierung und zur Freiraumerkennung am letzten Armelement im Bereich des Greifers G angebracht. Die Sensordaten der Sensorik S werden in einer im Flurförderzeug 1 untergebrachten Datenverarbeitungseinheit D ausgewertet.

Durch die am Roboterarm R montierte Sensorik S wird die Zielpalette Z erfasst. Eine geeignete Algorithmik der Datenverarbeitungseinheit D übernimmt die Berechnung der relativen Position der Zielpalette Z im lokalen Roboter-Koordinatensystem des autonomen Kommissionierfahrzeugs 1.

Der Roboterarm R wird so verfahren, dass die Sensorik S von oben auf die auf der Zielpalette Z bereits gestapelten Stückgüter P blicken kann. Auf diese Weise kann die Sensorik S den aktuellen Packzustand auf der Zielpalette Z erfassen und überwachen.

Die Sensorsignale werden in der Datenverarbeitungseinheit D verarbeitet und interpretiert.

Somit ist mittels der Sensorik S sowohl eine sensorgestützte Lokalisierung der Zielpalette Z relativ zum Roboterarm R als auch eine Freiraumerkennung auf der Zielpalette Z in Bezug auf Zielposition und kollisionsfreie Ablagebewegung des Roboterarms R möglich.

Der Ablageprozess umfasst mehrere Prozessschritte, bestehend aus a) Vorabberechnung des Packmusters der Zielpalette Z anhand des von einem externen Warenmanagementsystem an die Datenverarbeitungseinheit D übermittelten Kommissionierauftrags mit Definition von Zielposition und Packreihenfolge, b) sensorgestützte Lokalisierung der Zielpalette Z relativ zum Roboterarm R mittels der Sensorik S und Auswertung der Sensorsignale in der Datenverarbeitungseinheit D, c) Freiraumerkennung auf der Zielpalette Z mittels der Sensorik S in Bezug auf Zielposition eines Stückguts P und kollisionsfreie Ablagebewegung des Roboterarms R und d) Feinpositionierung mit Erfassung der Position des Greifers G und sensorgestützter Kollisionsüberwachung mittels der Sensorik S und Auswertung der Sensorsignale in der Datenverarbeitungseinheit D.

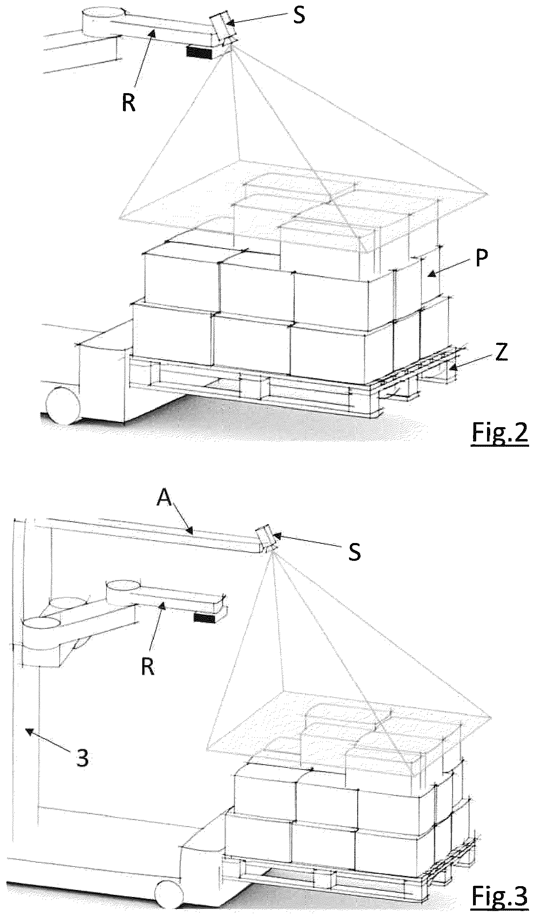

Die Figur 2 zeigt eine Variante einer Anbringung der Sensorik S am Greifer G bzw. am Roboterarm R im Bereich des Greifers G. Die Sensorik S kann mittels des Roboterarms R vertikal und horizontal verfahren werden, um einen optimalen Überblick über die Zielpalette Z und die darauf gestapelten Stückgüter P zu erhalten.

In der Figur 3 ist eine Variante einer Anbringung der Sensorik S an einem starren Ausleger A gezeigt, der wie der Roboterarm R am Hubmast 3 vertikal verfahren werden kann.

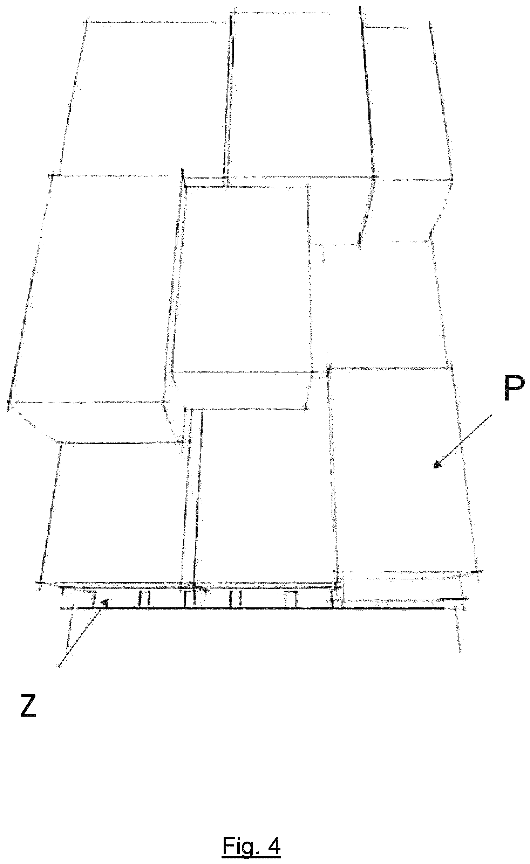

Die Figur 4 zeigt eine Sensorperspektive von oben auf die auf der Zielpalette Z (Mischpalette) gestapelten Stückgüter P.

## Patentansprüche

1. Verfahren zum Kommissionieren von Stückgütern (P), die auf mindestens einem Quell-Ladungsträger bevorratet und vereinzelt auf mindestens einem Ziel-Ladungsträger (Z) abgelegt werden, wobei die Stückgüter (P) mittels einer auf einem autonomen Flurförderzeug (1) angeordneten, mit einem Aufnahmewerkzeug (G) versehenen, Handhabungseinrichtung (R) von dem Quell-Ladungsträger (Q) aufgenommen und in einem Ablageprozess auf dem Ziel-Ladungsträger (Z) abgelegt werden, **dadurch gekennzeichnet, dass** der Ablageprozess mehrere Schritte umfasst, wobei in einem ersten Schritt eine Vorabberechnung eines optimierten Packmusters anhand eines Kommissionierauftrags durchgeführt wird, gemäß dem die Stückgüter (P) auf dem Ziel-Ladungsträger (Z) gestapelt werden, in einem zweiten Schritt eine sensorgestützte Lokalisierung des Ziel-Ladungsträgers durchgeführt wird und in einem dritten Schritt eine sensorgestützte Freiraumerkennung durchgeführt wird, bei der eine aktuelle Zielposition des abzulegenden Stückguts (P) auf dem Ziel-Ladungsträger (Z) und eine kollisionsfreie Ablagebewegung der Handhabungseinrichtung (R) bestimmt werden.

2. Verfahren nach Anspruch 1, **dadurch gekennzeichnet, dass** im ersten Schritt das optimierte Packmuster nach Bewertungskriterien berechnet wird, die Stabilität, Höhe und Volumennutzung der gestapelten Stückgüter (P) umfassen.

3. Verfahren nach Anspruch 1 oder 2, **dadurch gekennzeichnet, dass** bei der Berechnung des optimierten Packmusters eine optimale Zielposition auf dem Ziel-Ladungsträger (Z) und eine optimale Packreihenfolge definiert werden.

4. Verfahren nach einem der Ansprüche 1 bis 3, **dadurch gekennzeichnet, dass** im zweiten Schritt die relative Position des Ziel-Ladungsträgers (Z) im Koordinatensystem des autonomen Flurförderzeugs (1) und/oder der Handhabungseinrichtung (R) bestimmt wird.

5. Verfahren nach einem der Ansprüche 1 bis 4, **dadurch gekennzeichnet, dass** im dritten Schritt ein aktueller Packzustand auf dem Ziel-Ladungsträger (Z) mittels einer Sensorik (S) erfasst wird, und die Sensorsignale in einer Datenverarbeitungseinheit (D) ausgewertet und mit dem vorabberechneten Packmuster abgeglichen werden, und daraus die aktuelle Zielposition des abzulegenden Stückguts (P) auf dem Ziel-Ladungsträger (Z) und die kollisionsfreie Ablagebewegung der Handhabungseinrichtung (R) bestimmt werden.

6. Verfahren nach Anspruch 5, **dadurch gekennzeichnet, dass** als Sensorik (S) eine optische Sensorik (S) verwendet wird, die die zweidimensionale Bildinformationen und/oder dreidimensionale Tiefeninformationen als Sensorsignale liefert.

7. Verfahren nach Anspruch 5 oder 6, **dadurch gekennzeichnet, dass** als Sensorik eine von oben auf den Ziel-Ladungsträger (Z) gerichtete Sensorik (S) verwendet wird.

8. Verfahren nach einem der Ansprüche 5 bis 7, **dadurch gekennzeichnet, dass** als Sensorik (S) eine vertikal verfahrbare Sensorik (S) verwendet wird.

9. Verfahren nach einem der Ansprüche 5 bis 8, **dadurch gekennzeichnet, dass** als Sensorik (S) eine an der Handhabungseinrichtung (R) angeordnete Sensorik (S) verwendet wird.

10. Verfahren nach einem der Ansprüche 5 bis 8, **dadurch gekennzeichnet, dass** als Sensorik (S) eine an einem starren Ausleger (A) angeordnete Sensorik (S) verwendet wird.

11. Verfahren nach einem der Ansprüche 1 bis 10, **dadurch gekennzeichnet, dass** in einem vierten Schritt eine Feinpositionierung des abzulegenden Stückguts (P) auf dem Ziel-Ladungsträger (Z) durchgeführt wird, bei der durch sensorgestützte Bestimmung der relativen Position des Aufnahmewerkzeugs (G) im Koordinatensystem des Ziel-Ladungsträgers (Z) und Auswertung der Sensorsignale in der Datenverarbeitungseinheit (D) die Handhabungseinrichtung (R) so gesteuert wird, dass das abzulegende Stückgut (P) dicht neben benachbarten Stückgütern (P) platziert wird.

12. Verfahren nach einem der Ansprüche 1 bis 11, **dadurch gekennzeichnet, dass** mittels einer am Aufnahmewerkzeug (G) angeordneten Sensorik (S) mindestens ein Sicherheitsfeld in einem Umgebungsbereich des Aufnahmewerkzeugs (G) überwacht wird, wodurch eine kollisionsfreie Annäherung des abzulegenden Stückguts (P) an bereits auf dem Ziel-Ladungsträger (Z) abgelegte Stückgüter ermöglicht wird.

13. Verfahren nach Anspruch 12, **dadurch gekennzeichnet, dass** das Sicherheitsfeld kontinuierlich und situativ an den aktuellen Packzustand auf dem Ziel-Ladungsträger (Z) angepasst wird.

14. Verfahren nach einem der Ansprüche 11 bis 13, **dadurch gekennzeichnet, dass** im vierten Schritt das abzulegende Stückgut (P) mittels eines Ausgleichselements, das Relativbewegungen des Aufnahmewerkzeugs (G) relativ zur Handhabungseinrichtung (R) ermöglicht, spaltfrei neben benachbarten Stückgütern (P) platziert wird.

15. System zur Durchführung des Verfahrens nach einem der Ansprüche 1 bis 14 mit mindestens einem Quell-Ladungsträger und mindestens einem Ziel-Ladungsträger (Z) sowie einem autonomen Flurförderzeug (1), auf dem eine Handhabungseinrichtung (R) mit einem Aufnahmewerkzeug (G) zur Handhabung der Stückgüter (P) sowie eine Datenverarbeitungseinheit (D), die über eine Schnittstelle zu einem fahrzeugexternen Warenmanagementsystem verfügt, und eine Sensorik (S), die mit der Datenverarbeitungseinheit (D) in Wirkverbindung steht, angeordnet sind, **dadurch gekennzeichnet, dass** die Datenverarbeitungseinheit (D) dazu eingerichtet ist, in einem ersten Schritt eine Vorabberechnung eines optimierten Packmusters anhand eines vom Warenmanagementsystem übermittelten Kommissionierauftrags durchzuführen, gemäß dem die Stückgüter (P) auf dem Ziel-Ladungsträger (Z) gestapelt werden, in einem zweiten Schritt durch Auswertung der Sensorsignale der Sensorik (S) eine Lokalisierung des Ziel-Ladungsträgers (Z) durchzuführen und in einem dritten Schritt durch Auswertung der Sensorsignale der Sensorik (S) eine Freiraumerkennung durchzuführen, bei der eine aktuelle Zielposition des abzulegenden Stückguts (P) auf dem Ziel-Ladungsträger (Z) und eine kollisionsfreie Ablagebewegung der Handhabungseinrichtung (R) bestimmt werden.

16. System nach Anspruch 15, **dadurch gekennzeichnet, dass** die Sensorik (S) mindestens einen optischen 3D-Sensor, insbesondere eine 3D-Kamera und/oder einen 3D-Laserscanner, umfasst.

17. System nach Anspruch 15 oder 16, **dadurch gekennzeichnet, dass** die Sensorik mindestens einen höhenverstellbaren und auf den Ziel-Ladungsträger (Z) ausrichtbaren Sensor (S) umfasst.

18. System nach einem der Ansprüche 15 bis 17, **dadurch gekennzeichnet, dass** die Sensorik (S) mindestens einen an der Handhabungseinrichtung (R) angeordneten Sensor (S) umfasst.

19. System nach einem der Ansprüche 15 bis 17, **dadurch gekennzeichnet, dass** die Sensorik (S) mindestens einen an einem starren Ausleger oberhalb des Ziel-Ladungsträgers (Z) angeordneten Sensor umfasst.

20. System nach einem der Ansprüche 15 bis 19, **dadurch gekennzeichnet, dass** die Sensorik (S) mindestens einen am Aufnahmewerkzeug (G) angeordneten Sensor umfasst.

21. System nach einem der Ansprüche 15 bis 20, **dadurch gekennzeichnet, dass** die Handhabungseinrichtung (R) über einen Roboterarm (R) verfügt, wobei zwischen dem Roboterarm (R) und dem Aufnahmewerkzeug (G) ein Ausgleichselement angeordnet ist, welches Relativbewegungen zwischen dem Roboterarm (R) und dem Aufnahmewerkzeug (G) ermöglicht.
